# EUROPEAN PATENT SPECIFICATION

(11) **EP 1 143 672 B1**
(45) Date of publication and mention of the grant of the patent: **20.07.2005**
(21) Application number: 01301677.9
(22) Date of filing: 23.02.2001
(51) Int. Cl.: H04L 12/56, H04Q 11/04

(54) **Method and system for transmitting data using flow control**
Verfahren und System zur Übertragung von Daten mit einer Datenflusssteuerung
Procédé et système pour transmission de données avec contrôle de flux

(30) Priority: 27.03.2000 US 535696
(43) Date of publication of application: 10.10.2001
(73) Proprietor: Hewlett-Packard Company, Palo Alto, CA 94304 (US)
(72) Inventor: Jones, Scott Arthur, Rocklin, CA 95765 (US); Berkema, Alan Chris, Granite Bay, CA 95746 (US); Le, Thang Vinh, Rocklin, CA 95677 (US); Anast, Fred Joel, Auburn, CA 95603 (US)
(74) Representative: Exell, Jonathan Mark

(56) References cited:
- KUANG H T ET AL: "Client-server performance on flow-controlled ATM networks: a Web database of simulation results" INFOCOM '97. SIXTEENTH ANNUAL JOINT CONFERENCE OF THE IEEE COMPUTER AND COMMUNICATIONS SOCIETIES. DRIVING THE INFORMATION REVOLUTION., PROCEEDINGS IEEE KOBE, JAPAN 7-11 APRIL 1997, LOS ALAMITOS, CA, USA,IEEE COMPUT. SOC, US, 7 April 1997 (1997-04-07), pages 1218-1226, XP010251953 ISBN: 0-8186-7780-5
- CHANG K: "IP Layer Per-flow Queueing and Credit Flow Control" , January 1998 (1998-01), XP002146481

## Description

The present invention relates to a method and a system for transmitting data between at least one receiver operatively connected to at least one transmitter, for example for permissible transmission via at least one high-speed link having a plurality of virtual channels.

Virtual channels are generally used for maximum efficiency usage of a single bi-directional serial link between a receiver and a transmitter. The communication is usually based on asynchronous concurrent processes at the packet level. More specifically, Communicating Sequential Processes ("CSP") is used for synchronised communication between the receiver and transmitter, meaning each communicating process waits until data transfer is complete before continuing.

One known method for maintaining the CSP while ensuring that no data is lost or overwritten suggests the use of acknowledgement packets. The receiver must acknowledge each packet before another can be sent, and all the packets of a message must also be acknowledged before the sending process continues. In this case, when the data packet is received by a process, an acknowledgement packet is sent back to the transmitter. The acknowledgement packet allows the transmitter to send another packet after a packet has been received or even partially received.

The problem with using acknowledgement packets is that the transmitter does not necessarily know if the receiver is ready to receive a packet in the first place. When the transmitter sends a packet to the receiver that does not have any available buffer, the packet is either lost or the link is flow controlled at the physical layer. If the packet is lost, the transmitter will never receive the acknowledgement packet. As a result, it must rely on some timer to know when to try again, causing delay and waste of bandwidth. On the other hand, if the data is flow controlled at the physical layer, data transmission is indefinitely postponed until the receiver is able to accept the data. Again, this causes both delay and waste of bandwidth by blocking other virtual channels.

"Client-Server Performance on Flow-Controlled ATM Networks: A Web Database of Simulation Results" by Kung H.T. et al discloses a credit-based flow control. This document discloses a method of transmitting data between at least one receiver operatively connected to at least one transmitter via at least one high-speed link having a plurality of virtual channels. The method includes the receiver sending a virtual channel credit packet for a particular virtual circuit to the transmitter. The transmitter, after having received the credit packet is eligible to send some number of data cells to the receiver and decrements its current balance for the virtual circuit by one.

The present invention seeks to provide improved data transmission. According to an aspect of the present invention, there is provided a method of transmitting data between at least one receiver operatively connected to at least one transmitter as specified in claim 1.

According to another aspect of the present invention, there is provided a system for transmitting data packets between at least one receiver operatively connected to at least one transmitter as specified in claim 11.

The preferred embodiment provides a method and system for transmitting data using a virtual channel credit packet over a high-speed link with a plurality of virtual channels, preferably without the use of acknowledgement packets. Advantageously, the system allows the transmitter to send a data packet to a receiver only after the receiver has resources to receive the packet. Transmission is preferably via at least one high-speed link with a plurality of virtual channels using more efficient bandwidth. Data may be transmitted using a virtual channel credit packet having a unique assigned virtual channel number for each virtual channel.

In the preferred embodiment, there is provided a method and a system for transmitting data between one or more receivers operatively connected to one or more transmitters, and more particularly for permissible transmission via at least one high-speed link having a plurality of virtual channels. By having the receiver send a credit packet with a unique virtual channel number that is specifically assigned to each virtual channel only when it has a buffer available, the system is able to bypass the need for an acknowledgement packet, resulting in reliable transmissions and efficient use of bandwidth.

Advantageously, the receiver first sends a virtual channel credit packet for a particular virtual channel to the transmitter only if the receiver is available to receive data. A unique virtual channel number is assigned for that particular virtual channel, and is included in the virtual channel packet. Then, the transmitter responds to the virtual channel credit packet accordingly, which includes transmitting data to the receiver if it is actually available. The receiver then receives the data packet transmitted from the transmitter. The sending of a credit packet guarantees that the receiver is ready and has the available resources to receive transmission data from the transmitter.

An embodiment of the present invention is described below, by way of example only, with reference to the accompanying drawings, in which:
Figure 1 is a schematic diagram of an exemplary connection between a peripheral and an input/output (I/O) card in which the system may be implemented;
Figure 2 is an ensemble illustrating the format and control characters for the data packet and the credit packet for one virtual channel;
Figure 3 is a sequence illustrating the flow of the credit packet and the data packet for one virtual channel;
Figure 4 is a flowchart illustrating the subroutine executed by the receiver; and,
Figure 5 is a flowchart illustrating the subroutine executed by the transmitter.

Broadly stated, the preferred embodiment is directed to a method and a system for transmitting data between at least one receiver operatively connected to at least one transmitter over a high-speed link with a plurality of virtual channels. Each virtual channel is assigned with a unique virtual channel number. When the receiver is ready for transmission for a particular virtual channel, it sends a virtual channel credit packet bearing the assigned virtual channel number. The transmitter then responds to the virtual channel credit packet. After the transmission for this particular virtual channel is finished, the process is repeated for the next virtual channel until all the virtual channels are running.

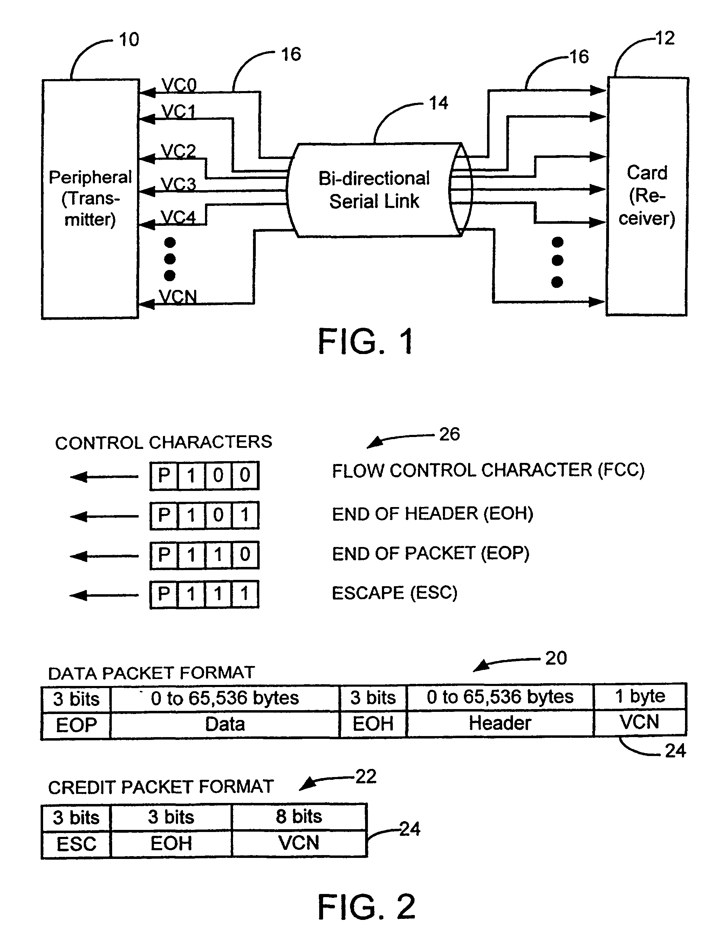

Turning now to Figure 1, a schematic diagram of an exemplary connection between a peripheral device or peripheral and an I/O card is shown and illustrates one way in which the receiver is connected to the transmitter for the implementation of the present invention. However, it should be understood that other connections are possible and are within the scope of this disclosure. In this example, a peripheral 10 is connected to an I/O card 12 through a bi-directional serial link 14 with a plurality of virtual channels 16. In this case, the peripheral 10 is the transmitter, and the I/O card 12 is the receiver. Although any number of virtual channels 16 can be used, 256 virtual channels are preferred for this implementation. The virtual channels can start from the number zero, and end with any desired number N as long as it is finite. The only limitation is the hardware. However, the number of virtual channels is important in that it determines the number of credit packets that will be used in the present invention, as will be described. Furthermore, the present method loops to repeat the process until all the virtual channels are running.

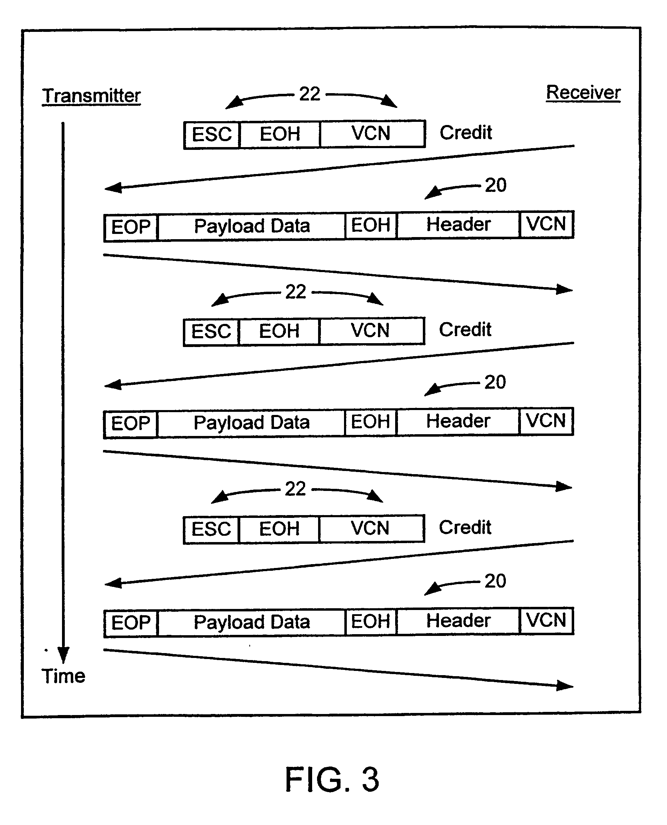

The preferred ensemble of a virtual channel data packet indicated generally at 20 and a credit packet indicated generally at 22 for one virtual channel is shown in detail in Figures 2 and 3. Each virtual channel is assigned a unique Virtual Channel Number (VCN) 24. As shown in Figure 2, the packets include some of the control characters 26 defined by the Institute of Electrical and Electrics Engineers Standards (IEEE Std) 1355-1995 for Heterogeneous Interconnect. In addition, the VCN 24 is used for both the data packet and the credit packet formats for each virtual channel. Because there is a number assigned for each virtual channel, the transmitter 10 and receiver 12 are able to keep track of the transmission within the plurality of virtual channels 16.

When the receiver 12 sends a virtual channel credit packet 22 for a particular virtual channel, the transmitter 10 knows to which virtual channel the credit packet is designated. In other words, the transmitter 10 is now granted permission to send a data packet 20, if available, to the receiver 12 through the virtual channel designated by the credit packet 22. In Figure 3, the sequence of the flow of the credit packet 22 and the data packet 20 for a single virtual channel is illustrated, with the direction of the arrows beneath the packet information depicting the direction of packet flow between transmitter and receiver. Each data packet 20 from a transmitter can be transmitted only when a credit packet 22 is issued by the receiver 12. Figure 3 shows the basic flow for multiple transmissions that may take place for each virtual channel.

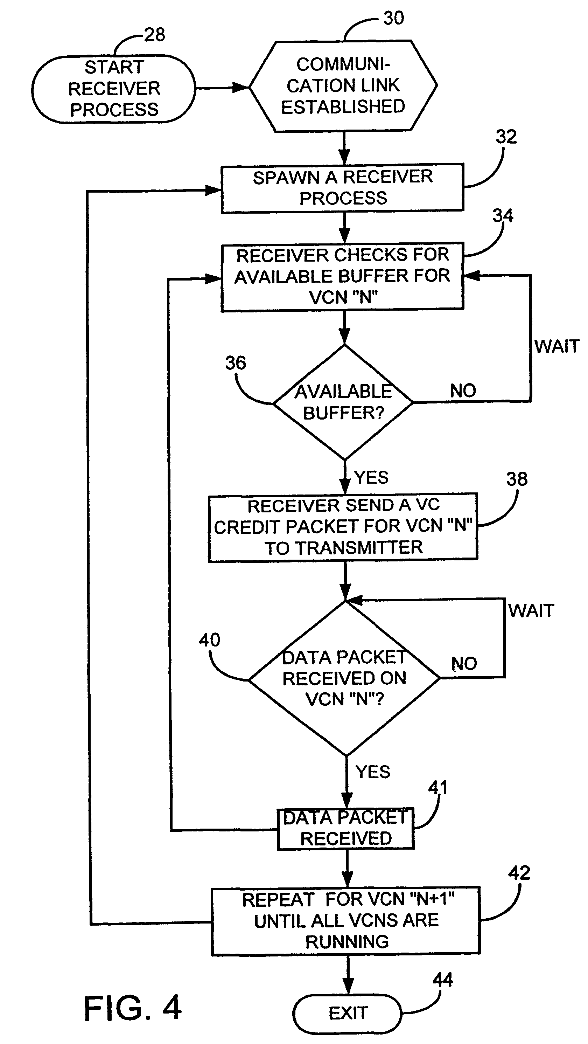

A flowchart illustrating the subroutine of the receiver 12 can be seen in Figure 4. In order for the receiver 12 to initially start the process (block 28) for a plurality of virtual channels 16, there must be an operable communication link established (block 30) between the transmitter 10 and the receiver. Once that is done, the receiver 12 spawns a receiver process for a particular virtual channel number N (block 32). The receiver 12 first checks if there is any available buffer for VCN "N" (block 34). If the receiver 12 does not have any buffer available for transmission (block 36), it waits for a predetermined time and rechecks for available buffer until it finds some buffer (block 34). Once available buffer is found (block 36), then the receiver 12 sends a virtual channel credit packet 22 for VCN "N" to the transmitter (block 38).

As noted earlier, the virtual channel credit packet 22 includes the VCN "N" to identify to the transmitter 10 that a transmission is permitted for VCN "N". The receiver 12 next checks to see if it has received a data packet 20 from the transmitter 10 (block 40). If a data packet 20 has not been received, it waits for a predetermined time and rechecks for a data packet 20 (block 40). On the other hand, if the receiver did receive the data packet 20 from the transmitter 10 (block 41), then it loops back to continue checking for available buffer for VCN "N" for the next data packet (block 34). At the same time, the receiver repeats the receiver process for the next VCN, specifically VCN "N+1" (block 42).

The receiver process is repeated until all the VCNs are running (block 42), which brings the receiver process to an end (block 44). Note that since the receiver 12 actually checks for available buffer before issuing a credit packet 22, an acknowledgement packet is not needed in the present invention. After the transmission of the data packet 20, the transmitter 10 is not allowed to send any more data packets until it receives another credit packet 22 bearing its designated VCN.

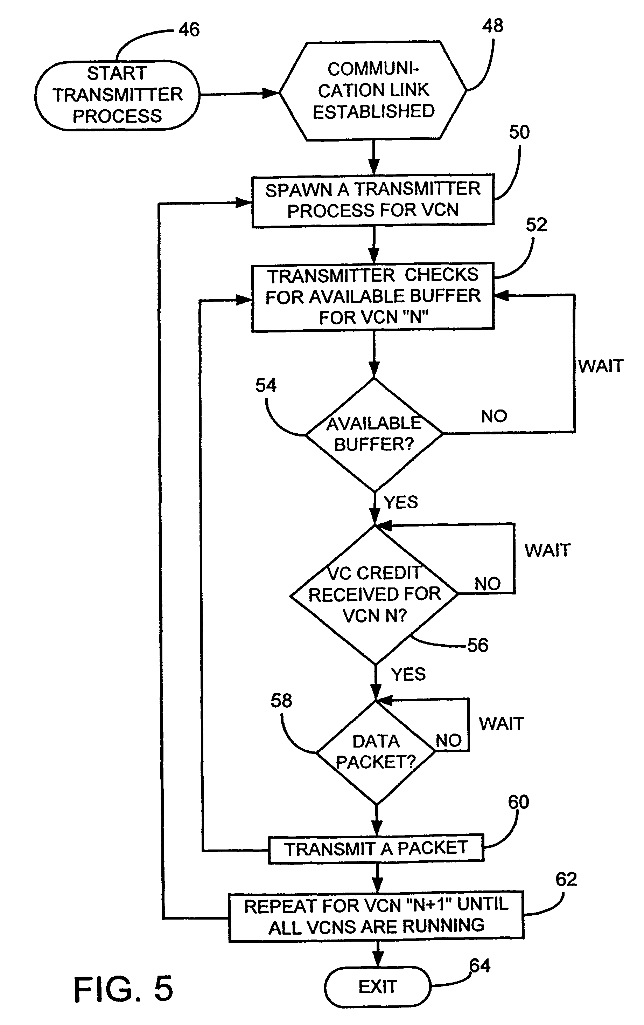

The flowchart for the subroutine of the transmitter 10 is illustrated in Figure 5. It is similar to the subroutine of the receiver in that the transmitter 10 does not start the transmitter process (block 46) until there is an operable communication link to the receiver 12 (block 48). When there is an established link, a transmitter process for a particular VCN is spawned (block 50), for example VCN "N". The transmitter 10 similarly verifies whether it has available buffer for transmission of packets for VCN "N" (block 52). If buffer is not available (block 54), it waits for a predetermined time and rechecks the buffer until there is available buffer for transmission (block 52).

In contrast, if there is available buffer (block 54), the transmitter 10 next looks for the virtual channel credit packet 22 with its assigned VCN "N" from the receiver 12 (block 56). If a credit packet 22 can not be found, the transmitter waits for a predetermined time and rechecks for the credit packet 22 for that particular virtual channel with VCN "N" (block 56). If there is a credit packet 22, it checks to determine if it has any data packets 20 for transmission (block 58). The transmitter again waits for a predetermined time and keeps checking for data packets 20 if there is no data packet for transmission (block 58). However, if there is a data packet 20, with the VCN "N" as described earlier, it will accordingly be transmitted to the receiver 12 (block 60). After the transmission of the data packet 20 for VCN "N", the transmitter 10 loops back to continue checking for an available buffer for VCN "N" (block 52). However, it also repeat the transmitter process for the next VCN or VCN "N + 1"" until all the VCNs are running (block 62). When all the VCNs are running, the transmitter process will exit the subroutine (block 64).

Thus, the preferred embodiment can provide improved transmission of data between at least one receiver operatively connected to at least one transmitter via at least one high-speed link with a plurality of virtual channels. The method and system allow the transmitter 10 to send data packets 20 to the receiver 12 only when the receiver is ready and has the available resources to accept the data packets. In addition, by using a data packet 20 and a credit packet 22 with a unique VCN 24 that is specifically assigned to each virtual channel, the present invention is able to avoid the need for an acknowledgement packet, resulting in a more efficient use of bandwidth.

## Claims

1. A method of transmitting data one data packet at a time between at least one receiver (12) operatively connected to at least one transmitter (10) via at least one high-speed link having a plurality of virtual channels (16), the method comprising the steps of:
a - for a particular virtual channel (16) the receiver (12) checking for available buffer at the receiver (12) to buffer incoming packets from the transmitter (10) from said plurality of virtual channels (16),
b - the receiver (12) sending a single virtual channel credit packet (22) for the particular virtual channel (16) to the transmitter (10), said credit packet (22) being indicative that said receiver (12) is available to receive a single data packet (20) and having a unique virtual channel number assigned to said particular virtual channel (16) thereto;
c - the transmitter (10) responding to said virtual channel credit packet (22) including transmitting a single data packet (20) on said assigned particular virtual channel (16) to the receiver (12) if a data packet (20) is available, after the transmission of a data packet (20), the transmitter (10) is not allowed to send any more data packets (20) on said assigned particular virtual channel (16) until it receives another virtual channel credit packet (22) for said assigned particular virtual channel (16) from the receiver (12) ;
d - the receiver (12) waiting to receive a data packet (20) on said particlar virtual channel (16) transmitted from the transmitter (10); and,
e - upon first receiving a data packet (20) in step d, the receiver (12) repeating steps a - d for the particular virtual channel (16) and repeating steps a - e for the next virtual channel number until all virtual channels (16) are running.

2. A method according to claim 1, wherein said virtual channel credit packet (22) is sent when the receiver (12) has the available resources to receive transmission data from the transmitter (10) for said particular virtual channel (16) and is ready to do so.

3. A method according to claim 1 or 2, wherein said data includes said unique virtual channel number assigned to said particular virtual channel (16).

4. A method according to any preceding claim, wherein the step of the receiver (12) checking for available buffer includes the steps of:
the receiver (12) waiting for a predetermined time if no buffer is available; and
the receiver (12) sending said virtual channel credit packet (22) for said specific virtual channel (16) once buffer is available.

5. A method according to any preceding claim, wherein said step of the transmitter (10) responding to said virtual channel credit packet (22) comprises the steps of:
the transmitter (10) checking for available buffer at the transmitter side for said specific virtual channel (16);
the transmitter (10) waiting for a predetermined time if no buffer is available, and
the transmitter (10) looking for said virtual channel credit packet (22) from the receiver (12) if a buffer is available.

6. A method according to claim 5, wherein said step of the transmitter (10) looking for said virtual channel credit packet (22) comprises the steps of:
the transmitter (10) waiting for a predetermined time if said virtual channel credit packet (22) is not found; and
the transmitter (10) checking for available data for transmission if said virtual channel credit packet (22) is found.

7. A method according to claim 6, wherein said step of the transmitter (10) checking for available data further comprising the steps of:
the transmitter (10) waiting for a predetermined time if no data is available; and
the transmitter (10) sending said data if data is available.

8. A method according to claim 4, 5, 6 or 7, wherein said step of the receiver (12) or transmitter (10) waiting for a predetermined time comprises the step of:
the receiver (12) or the transmitter (10) repeatedly checking for available buffer until a buffer is available or
the transmitter (10) repeatedly checking for available data until data is available for transmission or
the transmitter (10) looking for said virtual channel credit packet (22) until said virtual channel credit packet (22) is found.

9. A method according to claim 7, wherein said step of the transmitter (10) sending said data comprises the step of the transmitter (10) repeating the method according to claim 1 for the next virtual channel credit number.

10. A method according to claim 1, wherein said step of the receiver (12) accepting said data comprises the steps of:
the receiver (12) checking if said data has been received from the transmitter (10);
the receiver (12) waiting for a predetermined time if said data has not been received; and
the receiver (12) repeating the method according to claim 1 for the next virtual channel number if said data has been received.

11. A system for transmitting data packets (20) one data packet at a time between at least one receiver (12) operatively connected to at least one transmitter (10) via at least one high-speed link having a plurality of virtual channels (16), said system comprising means for performing all of the steps of any preceding claims.

## Patentansprüche

1. Ein Verfahren, um Daten Datenpaket für Datenpaket zwischen zumindest einem Empfänger (12), der über zumindest eine Hochgeschwindigkeitsverbindung, die eine Mehrzahl virtueller Kanäle (16) aufweist, mit zumindest einem Sender (10) wirksam verbunden ist, zu übertragen, wobei das Verfahren folgende Schritte aufweist:
(a) für einen bestimmten virtuellen Kanal (16) prüft der Empfänger (12), ob an dem Empfänger (12) Zwischenspeicher verfügbar ist, um eingehende Pakete von dem Sender (10) von der Mehrzahl virtueller Kanäle (16) zwischenzuspeichern;
(b) der Empfänger (12) sendet ein einzelnes Virtueller-Kanal-Kreditpaket (22) für den bestimmten virtuellen Kanal (16) an den Sender (10), wobei das Kreditpaket (22) anzeigt, dass der Empfänger (12) verfügbar ist, um ein einzelnes Datenpaket (20) zu empfangen, und eine eindeutige Virtueller-Kanal-Nummer aufweist, die dem bestimmten virtuellen Kanal (16) zugewiesen ist;
(c) der Sender (10) spricht auf das Virtueller-Kanal-Kreditpaket (22) an, einschließlich eines Übertragens eines einzelnen Datenpakets (20) auf dem zugewiesenen bestimmten virtuellen Kanal (16) an den Empfänger (12), wenn ein Datenpaket (20) verfügbar ist, wobei der Sender (10) nach der Übertragung eines Datenpakets (20) keine weiteren Datenpakete (20) auf dem zugewiesenen bestimmten virtuellen Kanal (16) senden darf, bis er ein weiteres Virtueller-Karlal-Kreditpaket (22) für den zugewiesenen bestimmten virtuellen Kanal (16) von dem Empfänger (12) empfängt;
(d) der Empfänger (12) wartet darauf, ein Datenpaket (20) auf dem bestimmten virtuellen Kanal (16), das von dem Sender (10) gesendet wird, zu empfangen; und
(e) nach einem ersten Empfangen eines Datenpakets (20) im Schritt (d) wiederholt der Empfänger (12) die Schritte (a) bis (d) für den bestimmten virtuellen Kanal (16) und wiederholt die Schritte (a) bis (e) für die nächste Virtueller-Kanal-Nummer, bis alle virtuellen Kanäle (16) am Laufen sind.

2. Ein Verfahren gemäß Anspruch 1, bei dem das Virtueller-Kanal-Kreditpaket (22) gesendet wird, wenn der Empfänger (12) die verfügbaren Ressourcen aufweist, um Übertragungsdaten von dem Sender (10) für den bestimmten virtuellen Kanal (16) zu empfangen, und bereit hierfür ist.

3. Ein Verfahren gemäß Anspruch 1 oder 2, bei dem die Daten die eindeutige Virtueller-Kanal-Nummer, die dem bestimmten virtuellen Kanal (16) zugewiesen ist, umfassen.

4. Ein Verfahren gemäß einem der vorherigen Ansprüchen, bei dem der Schritt, in dem der Empfänger (12) prüft, ob Zwischenspeicher verfügbar ist, die folgenden Schritte umfasst:
der Empfänger (12) wartet eine vorbestimmte Zeit, wenn kein Zwischenspeicher verfügbar ist; und
der Empfänger (12) sendet das Virtueller-Kanal-Kreditpaket (22) für den spezifischen virtuellen Kanal (16), sobald Zwischenspeicher verfügbar ist.

5. Ein Verfahren gemäß einem der vorherigen Ansprüche, bei dem der Schritt, in dem der Sender (10) auf das Virtueller-Kanal-Kreditpaket (22) anspricht, die folgenden Schritte aufweist:
der Sender (10) prüft, ob Zwischenspeicher auf der Senderseite für den spezifischen virtuellen Kanal (16) verfügbar ist;
der Sender (10) wartet eine vorbestimmte Zeit, wenn kein Zwischenspeicher verfügbar ist; und
der Sender (10) sucht nach dem Virtueller-Kanal-Kreditpaket (22) von dem Empfänger (12), wenn Zwischenspeicher verfügbar ist.

6. Ein Verfahren gemäß Anspruch 5, bei dem der Schritt, in dem der Sender (10) nach dem Virtueller-Kanal-Kreditpaket (22) sucht, die folgenden Schritte aufweist:
der Sender (10) wartet eine vorbestimmte Zeit, wenn das Virtueller-Kanal-Kreditpaket (22) nicht gefunden wird; und
der Sender (10) prüft, ob Daten zur Übertragung verfügbar sind, wenn das Virtueller-Kanal-Kreditpaket (22) gefunden ist.

7. Ein Verfahren gemäß Anspruch 6, bei dem der Schritt, in dem der Sender (10) prüft, ob Daten verfügbar sind, ferner die folgenden Schritte aufweist:
der Sender (10) wartet eine vorbestimmte Zeit, wenn keine Daten verfügbar sind; und
der Sender (10) sendet die Daten, wenn Daten verfügbar sind.

8. Ein Verfahren gemäß Anspruch 4, 5, 6 oder 7, bei dem der Schritt, in dem der Empfänger (12) oder der Sender (10) eine vorbestimmte Zeit wartet, den folgenden Schritt aufweist:
der Empfänger (12) oder der Sender (10) prüft wiederholt, ob Zwischenspeicher verfügbar ist, bis Zwischenspeicher verfügbar ist, oder
der Sender (10) prüft wiederholt, ob Daten verfügbar sind, bis Daten zur Übertragung verfügbar sind, oder
der Sender (10) sucht nach dem Virtueller-Kanal-Kreditpaket (22), bis das Virtueller-Kanal-Kreditpaket (22) gefunden ist.

9. Ein Verfahren gemäß Anspruch 7, bei dem der Schritt, in dem der Sender (10) die Daten sendet, den Schritt aufweist, in dem der Sender (10) das Verfahren gemäß Anspruch 1 für die nächste Virtueller-Kanal-Kredit-Nummer wiederholt.

10. Ein Verfahren gemäß Anspruch 1, bei dem der Schritt, in dem der Empfänger (12) die Daten annimmt, die folgenden Schritte aufweist:
der Empfänger (12) prüft, ob die Daten von dem Sender (10) empfangen wurden;
der Empfänger (12) wartet eine vorbestimmte Zeit, wenn die Daten noch nicht empfangen wurden; und
der Empfänger (12) wiederholt das Verfahren gemäß Anspruch 1 für die nächste Virtueller-Kanal-Nummer, wenn die Daten empfangen wurden.

11. Ein System, um Datenpakete (20) Datenpaket für Datenpaket zwischen zumindest einem Empfänger (12), der über zumindest eine Hochgeschwindigkeitsverbindung, die eine Mehrzahl virtueller Kanäle (16) aufweist, wirksam mit zumindest einem Sender (10) verbunden ist, zu übertragen, wobei das System eine Einrichtung zum Durchführen aller Schritte der vorherigen Ansprüche aufweist.

## Revendications

1. Procédé de transmission de données un paquet de données à la fois entre au moins un récepteur (12) connecté de manière opérationnelle à au moins un émetteur (10) par au moins une liaison à haute vitesse ayant une pluralité de canaux virtuels (16), le procédé comprenant les étapes suivantes :
(a) pour un canal virtuel particulier (16), le récepteur (12) vérifie la disponibilité d'un tampon au niveau du récepteur (12) pour mettre en mémoire tampon les paquets entrants provenant de l'émetteur (10) depuis ladite pluralité de canaux virtuels (16) ;
(b) le récepteur (12) envoie un seul paquet de crédit de canal virtuel (22) pour le canal virtuel particulier (16) à l'émetteur (10), ledit paquet de crédit (22) indiquant que ledit récepteur (12) est disponible pour recevoir un seul paquet de données (20) et ayant un numéro de canal virtuel unique attribué audit canal virtuel particulier (16) ;
(c) l'émetteur (10) répond audit paquet de crédit de canal virtuel (22) en incluant la transmission d'un seul paquet de données (20) sur ledit canal virtuel particulier attribué (16) au récepteur (12) si un paquet de données (20) est disponible, après la transmission d'un paquet de données (20), l'émetteur (10) n'est pas autorisé à envoyer d'autres paquets de données (20) sur ledit canal virtuel particulier attribué (16) jusqu'à ce qu'il reçoive un autre paquet de crédit de canal virtuel (22) pour ledit canal virtuel particulier attribué (16) de la part du récepteur (12) ;
(d) le récepteur (12) attend de recevoir un paquet de données (20) sur ledit canal virtuel particulier (16) transmis depuis l'émetteur (10) ; et
(e) lors de la première réception d'un paquet de données (20) à l'étape (d), le récepteur (12) répète les étapes (a) à (d) pour le canal virtuel particulier (16) et répète les étapes (a) à (e) pour le numéro de canal virtuel suivant jusqu'à ce que tous les canaux virtuels (16) fonctionnent.

2. Procédé selon la revendication 1, dans lequel ledit paquet de crédit de canal virtuel (22) est envoyé lorsque le récepteur (12) a les ressources disponibles permettant de recevoir les données de transmission provenant de l'émetteur (10) pour ledit canal virtuel particulier (16) et est prêt à le faire.

3. Procédé selon la revendication 1 ou 2, dans lequel lesdites données comprennent ledit numéro de canal virtuel unique attribué audit canal virtuel particulier (16).

4. Procédé selon l'une quelconque des revendications précédentes, dans lequel l'étape où le récepteur (12) vérifie la disponibilité d'un tampon inclut les étapes suivantes :
le récepteur (12) attend pendant un temps prédéterminé si aucun tampon n'est disponible ; et
le récepteur (12) envoie ledit paquet de crédit de canal virtuel (22) pour ledit canal virtuel spécifique (16) une fois qu'un tampon est disponible.

5. Procédé selon l'une quelconque des revendications précédentes, dans lequel ladite étape où l'émetteur (10) répond audit paquet de crédit de canal virtuel (22) comprend les étapes suivantes :
l'émetteur (10) vérifie la disponibilité d'un tampon du côté de l'émetteur pour ledit canal virtuel spécifique (16) ;
l'émetteur (10) attend pendant un temps prédéterminé si aucun tampon n'est disponible ; et
l'émetteur (10) cherche ledit paquet de crédit de canal virtuel (22) provenant du récepteur (12) si un tampon est disponible.

6. Procédé selon la revendication 5, dans lequel ladite étape où l'émetteur (10) cherche ledit paquet de crédit de canal virtuel (22) comprend les étapes suivantes :
l'émetteur (10) attend pendant un temps prédéterminé si ledit paquet de crédit de canal virtuel (22) n'est pas trouvé ; et
l'émetteur (10) vérifie la disponibilité de données pour la transmission si ledit paquet de crédit de canal virtuel (22) est trouvé.

7. Procédé selon la revendication 6, dans lequel ladite étape où l'émetteur (10) vérifie la disponibilité de données comprend en outre les étapes suivantes :
l'émetteur (10) attend pendant un temps prédéterminé si aucune donnée n'est disponible ; et
l'émetteur (10) envoie lesdites données si des données sont disponibles.

8. Procédé selon la revendication 4, 5, 6 ou 7, dans lequel ladite étape où le récepteur (12) ou l'émetteur (10) attendent pendant un temps prédéterminé comprend l'étape suivante :
le récepteur (12) ou l'émetteur (10) vérifient de manière répétée la disponibilité d'un tampon jusqu'à ce qu'un tampon soit disponible, ou
l'émetteur (10) vérifie de manière répétée la disponibilité de données jusqu'à ce que des données soient disponibles pour la transmission, ou
l'émetteur (10) cherche ledit paquet de crédit de canal virtuel (22) jusqu'à ce que ledit paquet de crédit de canal virtuel (22) soit trouvé.

9. Procédé selon la revendication 7, dans lequel ladite étape où l'émetteur (10) envoie lesdites données comprend l'étape où l'émetteur (10) répète le procédé selon la revendication 1 pour le numéro de crédit de canal virtuel suivant.

10. Procédé selon la revendication 1, dans lequel ladite étape où le récepteur (12) accepte lesdites données comprend les étapes suivantes :
le récepteur (12) vérifie si lesdites données ont été reçues depuis l'émetteur (10) ;
le récepteur (12) attend pendant un temps prédéterminé si lesdites données n'ont pas été reçues ; et
le récepteur (12) répète le procédé selon la revendication 1 pour le numéro de canal virtuel suivant si lesdites données ont été reçues.

11. Système de transmission de paquets de données (20) un paquet de données à la fois entre au moins un récepteur (12) connecté de manière opérationnelle à au moins un émetteur (10) par au moins une liaison à haute vitesse ayant une pluralité de canaux virtuels (16), ledit système comprenant des moyens permettant d'exécuter toutes les étapes de l'une quelconque des revendications précédentes.
